# EUROPEAN PATENT APPLICATION

(11) **EP 4 811 599 A1**
(43) Date of publication of application: **23.09.2026**
(21) Application number: 24890401.3
(22) Date of filing: 14.10.2024
(51) Int. Cl.: H02J 7/00, B60L 58/10, H02M 7/5387

(54) **INVERTER CIRCUIT FOR ELECTRIC VEHICLE AND ELECTRIC VEHICLE**

(30) Priority: 15.11.2023 CN 202311519569
(71) Applicant: Wuhan Lotus Cars Co., Ltd., Wuhan, Hubei 430056 (CN)
(72) Inventor: WANG, Bin, Wuhan, Hubei 430056 (CN); JIANG, Guanfeng, Wuhan, Hubei 430056 (CN); ZHANG, Xiaofeng, Wuhan, Hubei 430056 (CN)
(74) Representative: Barker Brettell LLP
(86) International application number: PCT/CN2024/124818
(87) International publication number: WO 2025/103043

(57) **Abstract**

The present disclosure proposes an inverter circuit for an electric vehicle including an AC motor, which includes: a first relay, where the first relay is connected after a first phase of the AC motor; a second relay, where the second relay is connected after a second phase of the AC motor, an end of the first relay away from the first phase is electrically connected to an end of the second relay away from the second phase; a first output terminal and a second output terminal, where the first output terminal and the second output terminal are configured to output alternating current; a first capacitor, where the first capacitor is provided between the first output terminal and the second output terminal; and a third relay and a fourth relay, where the third relay is provided between the first output terminal and a first connection point, the first connection point is located between the second relay and the second phase, and where the fourth relay is provided between the second output terminal and a second connection point, the second connection point is located between the first relay and the first phase.

## Description

The present application claims priority to Chinese patent application No. 202311519569.4, filed with the China National Intellectual Property Administration on November 15, 2023 and entitled "INVERTER CIRCUIT FOR ELECTRIC VEHICLE AND ELECTRIC VEHICLE". The disclosures of the aforementioned applications are hereby incorporated by reference in their entireties.

### TECHNICAL FIELD

The present disclosure relates to the field of vehicle discharging technologies and, in particular, to a system and a vehicle for converting direct current (DC) of a vehicle-mounted battery pack into civil 220V alternating current (AC), and more specifically, to an inverter circuit for an electric vehicle including an AC motor and an electric vehicle including the inverter circuit.

### BACKGROUND

With the continuous development of new energy vehicles, their technological development is growing ever faster. The vehicle V2L (Vehicle to Load: Vehicle to Load) discharging technology is designed to meet diverse demands of vehicle users in outdoor camping scenarios.

In the prior art, the V2L discharging technology is realized by means of an inverter of an on-board charger, which suffers from a complex system, an increased risk of electromagnetic compatibility (EMC) issues, and high costs as well.

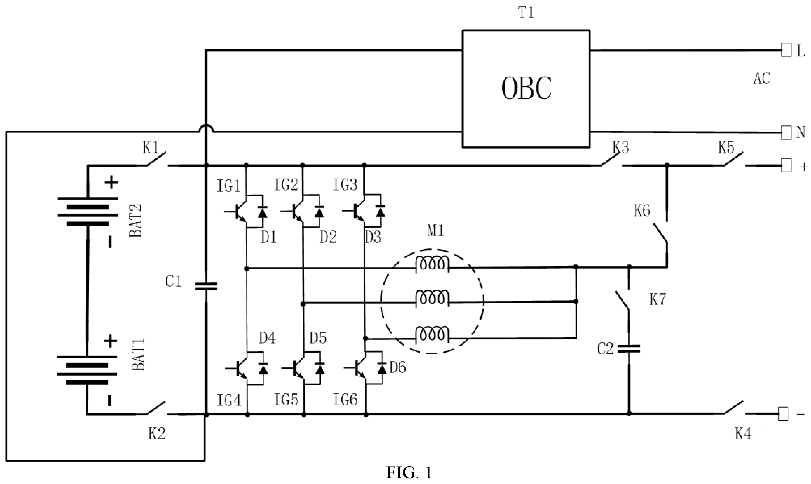

As shown in FIG. 1, the existing V2L discharging technology converts the direct current of a battery pack into civil 220V alternating current via the inverter inside an on-board charger (OBC). Specifically, the existing V2L discharging technology achieves the conversion of the direct current of the battery pack into the civil 220V alternating current via the inverter inside an on-board charger; in this case, internal components of the electric vehicle itself cannot be reused to achieve this technical objective. Instead, a separate dedicated inverter circuit needs to be designed (for example, incorporated in the on-board charger shown in FIG. 1), which results in a complex system design, an increased risk of EMC issues and, at the same time, increased costs.

### SUMMARY

To address the aforesaid problem, that is, when an existing electric vehicle needs to be connected to ordinary civil household electrical appliances externally, a dedicated on-board charger is required to convert direct current into civil alternating current for household electrical appliances by means of the inverter circuit provided therein, the inventors of the present disclosure have innovatively conceived of achieving the desired alternating current by means of the timing coordination of the two switching tubes associated with each electric drive bridge arm of the AC motor of the electric vehicle and the relays. This approach can not only reuse the existing components to reduce costs but also simplify the structure of the charger and obviate unnecessary electromagnetic compatibility issues, thus achieving two goals with one measure.

Based on this, a first aspect of the present disclosure proposes an inverter circuit for an electric vehicle, the electric vehicle including an AC motor, where the inverter circuit includes: a first relay, where the first relay is connected after a first phase of the AC motor; a second relay, where the second relay is connected after a second phase of the AC motor, an end of the first relay away from the first phase is electrically connected to an end of the second relay away from the second phase; a first output terminal and a second output terminal, where the first output terminal and the second output terminal are configured to output alternating current; a first capacitor, where the first capacitor is provided between the first output terminal and the second output terminal; and a third relay and a fourth relay, where the third relay is provided between the first output terminal and a first connection point, the first connection point is located between the second relay and the second phase, and where the fourth relay is provided between the second output terminal and a second connection point, the second connection point is located between the first relay and the first phase. In this manner, the voltages of the two phases of the AC motor can be selected by means of the timing coordination of the relays, thereby generating the required alternating current to meet the power demand of the household electrical appliances connected to the output terminals.

In an embodiment according to the present disclosure, the first output terminal and the second output terminal are configured to output 220V alternating current. In this manner, 220V alternating current can be output from the first output terminal and the second output terminal, thereby powering various household electrical appliances such as lighting lamps, electric fans or electric ovens. This in turn enables the provision of diverse lifestyle possibilities for vehicle owners with demands such as outdoor camping, and improves the user-friendliness of the electric vehicle according to the present disclosure.

In an embodiment according to the present disclosure, the inverter circuit includes the AC motor and an electric drive bridge arm associated with each phase of the AC motor, where each electric drive bridge arm includes two switching tubes, and a connection point of the two switching tubes is configured to connect to one phase of the AC motor. In this manner, the DC voltage output by the DC battery equipped in the electric vehicle can be converted into each phase of the three-phase AC power, thereby meeting the power demand of the three-phase AC motor.

In an embodiment according to the present disclosure, the inverter circuit further includes a control circuit, where the control circuit is configured to control the on-off of the switching tubes incorporated in the electric drive bridge arm, so as to control level of input electric potential of each phase of the AC motor. In this manner, the alternating current meeting the requirements (e.g., voltage level, current frequency) can be generated automatically and programmatically by means of the control circuit, thereby providing a stable power supply for household electrical appliances.

Preferably, in an embodiment according to the present disclosure, the motor is configured as a three-phase AC motor. More preferably, in an embodiment according to the present disclosure, the first phase and the second phase are any two phases selected from the three-phase AC motor.

Preferably, in an embodiment according to the present disclosure, the inverter circuit further includes a storage battery, where the storage battery is configured to provide direct current and is connected across both ends of the two switching tubes assigned to each phase. More preferably, in an embodiment according to the present disclosure, the inverter circuit further includes a second capacitor, where the second capacitor is provided between a positive pole and a negative pole of the storage battery.

Moreover, a second aspect of the present disclosure proposes an electric vehicle, the electric vehicle includes the inverter circuit proposed according to the first aspect of the present disclosure. Preferably, in an embodiment according to the present disclosure, the electric vehicle further includes a charging interface, positive and negative terminals of the charging interface are electrically connected to the positive and negative poles of the storage battery of the electric vehicle via relays, respectively.

In summary, in the inverter circuit and the corresponding electric vehicle proposed according to the present disclosure, the voltages of the two phases of the AC motor can be selected by means of the timing coordination of the relays, thereby generating the required alternating current to meet the power demand of the household electrical appliances connected to the output terminals.

### BRIEF DESCRIPTION OF DRAWINGS

With reference to the accompanying drawings and the following detailed description, the features, advantages and other aspects of the various embodiments of the present disclosure will become more apparent. Several embodiments of the present disclosure are shown herein by way of exemplary and not limitation.
FIG. 1 is a schematic structural diagram of an on-board charger according to the prior art.
FIG. 2 is a schematic structural diagram of an inverter circuit according to an embodiment of the present disclosure.

### DESCRIPTION OF EMBODIMENTS

Various exemplary embodiments of the present disclosure are described in detail below with reference to the accompanying drawings. Although the exemplary methods and apparatuses described hereinafter include software and/or firmware executed on hardware among other components, it should be noted that these examples are merely illustrative and should not be construed as limiting. For example, it is contemplated that any or all of the hardware, software and firmware components may be implemented exclusively in hardware, exclusively in software, or in any combination of hardware and software. Accordingly, while exemplary methods and apparatuses have been described below, the person skilled in the art will readily appreciate that the examples provided are not intended to limit the manners in which such methods and apparatuses may be implemented.

In addition, the flowcharts and block diagrams in the accompanying drawings illustrate the possible implementation architectures, functions and operations of the methods and systems according to various embodiments of the present disclosure. It should be noted that the functions noted in the blocks may also occur in an order different from that noted in the accompanying drawings. For example, two blocks shown in succession may in fact be executed substantially in parallel, or the blocks may sometimes be executed in the reverse order, depending upon the functionality involved. It should also be noted that each block in the flowcharts and/or block diagrams, and combinations of blocks in the flowcharts and/or block diagrams, can be implemented by a dedicated hardware-based system that performs the specified functions or operations, or by a combination of dedicated hardware and computer instructions.

The terms "comprise", "include" and similar terms used herein are open-ended terms, i.e., "including but not limited to", meaning that other content may also be included. The term "based on" means "based at least in part on". The term "an embodiment" means "at least one embodiment"; the term "another embodiment" means "at least one another embodiment", and so forth.

As described above, an existing electric vehicle, when it needs to be connected to ordinary civil household electrical appliances externally, requires a dedicated on-board charger to convert direct current into civil alternating current for household electrical appliances by means of the inverter circuit provided therein. This not only increases the manufacturing cost of the dedicated charger, but also introduces additional electromagnetic compatibility issues, which may adversely affect the operational stability of the vehicle.

Based on this, to address the aforesaid problem, the inventors of the present disclosure have innovatively conceived of utilizing the components of the electric vehicle itself, that is, the inventors of the present disclosure have innovatively conceived of achieving the desired alternating current by means of the timing coordination of the two switching tubes associated with each electric drive bridge arm of the AC motor of the electric vehicle and the relays. This approach can not only reuse the existing components to reduce costs, but also simplify the structure of the charger and obviate unnecessary electromagnetic compatibility issues, thus achieving two goals with one measure.

In summary, the present disclosure provides an inverter circuit for an electric vehicle, the electric vehicle includes an AC motor, where the inverter circuit includes: a first relay, where the first relay is connected after a first phase of the AC motor; a second relay, where the second relay is connected after a second phase of the AC motor, an end of the first relay away from the first phase is electrically connected to an end of the second relay away from the second phase; a first output terminal and a second output terminal, where the first output terminal and the second output terminal are configured to output alternating current; a first capacitor, where the first capacitor is provided between the first output terminal and the second output terminal; and a third relay and a fourth relay, where the third relay is provided between the first output terminal and a first connection point, the first connection point is located between the second relay and the second phase, and where the fourth relay is provided between the second output terminal and a second connection point, the second connection point is located between the first relay and the first phase. In this manner, the voltages of the two phases of the AC motor can be selected by means of the timing coordination of the relays, thereby generating the required alternating current to meet the power demand of the household electrical appliances connected to the output terminals.

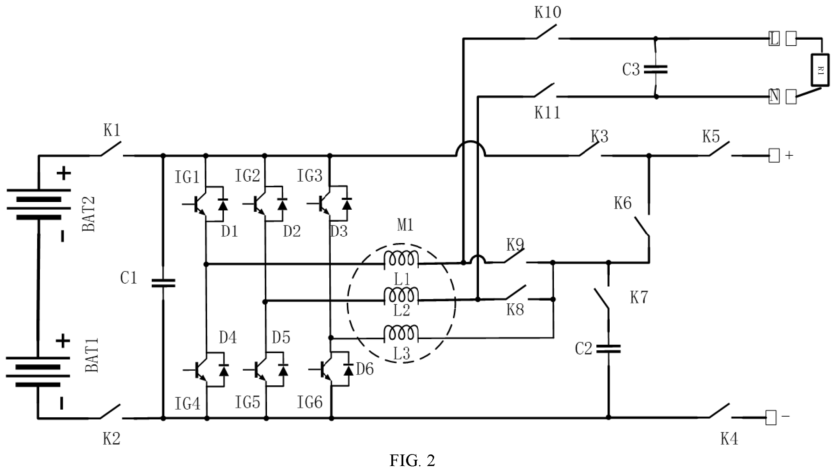

The technical principle and working mode of the inverter circuit disclosed according to the present disclosure will be described below with reference to the accompanying drawings. FIG. 2 is a schematic diagram of a system for realizing V2L discharge by controlling the on-off of switching tubes of an electric drive bridge arm according to an embodiment of the present disclosure.

First, an example of the components represented by reference signs in FIG. 2 of the present disclosure will be introduced. Where, the reference signs BTA1 or BAT2 in FIG. 2 respectively represent a 400V storage battery pack, for example, and may certainly be storage battery packs with other voltage amplitudes. The reference sign K1 represents a main positive relay; the reference sign K2 represents a main negative relay; the reference signs C1/C2/C3 respectively represent capacitors; the reference signs IG1, IG2, IG3, IG4, IG5 and IG6 respectively represent high-voltage switching tubes (IG1~IG6 form an electric drive bridge arm); the reference signs D1, D2, D3, D4, D5 and D6 respectively represent diodes; the reference sign M1 represents a three-phase AC motor; the reference signs L1/L2/L3 respectively represent motor inductors; the reference sign K5 represents a fast charging positive relay; the reference sign K4 represents a fast charging negative relay, the reference sign K3 represents an 800V charging relay, the reference signs K6/K7 400V charging relays, the reference signs K8/K9 represent motor circuit relays; and the reference signs K10/K11 represent discharge relays. In addition, the reference sign R1 represents an electrical appliance load.

As shown in example 1 of the present disclosure, that is, as shown in the schematic diagram of the system of FIG. 2: when relays K1/K2/K10/K11 are turned on and relays K3/K4/K5/K6/K7/K8/K9, the motor controller controls the on-off states of switching tubes IG1, IG2, IG3, IG4, IG5 and IG6, and then the direct current of the storage battery pack is converted into alternating current through inductors L1/L2 of the three-phase AC motor M1. To achieve such conversion, State of charge (SOC) of the storage battery pack meets the threshold for starting V2L, i.e., the state of charge must meet a certain requirement and cannot be in a low-power state, for example. Secondly, an entire electric vehicle is not in charging or driving mode, i.e., the battery pack needs to be in a discharging state rather than a charging state at this time, and cannot bear the load of the motor required for in-vehicle driving in addition to a load such as a household electrical appliance, so as to ensure that the inverter circuit according to the present disclosure can output a stable output voltage. Furthermore, the inverter circuit according to the present disclosure or the electric vehicle including the inverter circuit needs to be connected to a discharge load R1 to complete the circuit, i.e., the alternating current generated by the inverter circuit needs to be consumed by a load, or in other words, a load is required to close the AC circuit.

In specific operation, the circuit shown in FIG. 2 can have the following working stages, i.e., the specific working logic is as follows.

In the first stage, the main controller controls switching tubes IG1/IG5 to be in an on state and switching tubes IG2/IG3/IG4/IG6 to be in an off state (i.e., cut-off state). At this time, the current path is: the positive pole of BAT2 to the main positive relay K1, to the switching tube IG1, to the motor inductor L1, to the relay K10, to the electrical appliance load R1, then to the relay K11, to the motor inductor L2, to the main negative relay K2, and finally back to the negative pole of BAT1, thus forming a complete closed loop.

In the second stage, the main controller controls switching tubes IG2/IG4 to be in the on state and the switching tubes IG1/IG3/IG5/IG6 to be in the off state (i.e., cut-off state). At this time, the current path is: the positive pole of BAT2 to the main positive relay K1, to the switching tube IG2, to the motor inductor L2, to the relay K11, to the electrical appliance load R1, to the relay K10, to the motor inductor L1, to the main negative relay K2, and finally back to the negative pole of BAT1, thus forming a complete closed loop.

The above cycle repeats continuously. By controlling the switching sequence and frequency of the electric drive bridge arm, a square wave is formed at the bridge arm end, and then a low-pass filter is performed through the LC oscillation circuit formed by motor inductors L1/L2 and C3 to convert the square wave into a sinusoidal AC wave for the electrical appliance load R1.

The technical advantages of realizing V2L discharge by controlling the electric drive bridge arm are as follows: firstly, the system complexity is reduced, no additional inverter circuit is needed, and the existing components of the AC motor are reused, thus reducing the cost; secondly, the system utilization rate is improved; finally, the risk of electromagnetic compatibility (EMC) of the system is also reduced.

In summary, the technical solution of the present disclosure realizes the V2L discharge technology for converting the direct current of a battery pack into civil alternating current through relay switching and the on-off control of high-voltage switching tubes of the electric drive bridge arm, which reduces the system cost and complexity, achieves a high utilization rate of the electric drive system, and lowers the system EMC risk, bringing users a diversified experience of outdoor camping scenarios. In other words, the technical solution disclosed in the present disclosure is a system for converting the direct current of a battery pack into civil 220V alternating current by controlling the on-off of switching tubes of the electric drive bridge arm, which has the advantages of a simple system and low cost.

In summary, the first aspect of the present disclosure provides an inverter circuit for an electric vehicle, the electric vehicle includes an AC motor M1, where the inverter circuit includes: a first relay K8, where the first relay K8 is connected after a first phase of the AC motor M1; a second relay K9, where the second relay K9 is connected after a second phase of the AC motor M1, an end (for example, the right end as shown in FIG. 2) of the first relay K8 away from the first phase is electrically connected to an end (for example, the right end as shown in FIG. 2) of the second relay K9 away from the second phase; a first output terminal L and a second output terminal N, where the first output terminal L and the second output terminal N are configured to output alternating current, i.e., for example, to connect to the load R1; a first capacitor C3, where the first capacitor C3 is provided between the first output terminal L and the second output terminal N; and a third relay K10 and a fourth relay K11, where the third relay K10 is provided between the first output terminal L and a first connection point (the connection point on the left side of K9), the first connection point (the connection point on the left side of K9) is located between the second relay K9 and the second phase, and where the fourth relay K11 is provided between the second output terminal N and a second connection point (the connection point on the left side of K8), the second connection point (the connection point on the left side of K8) is located between the first relay K8 and the first phase. In this manner, the voltages of the two phases of the AC motor can be selected by means of the timing coordination of the relays, thereby generating the required alternating current to meet the power demand of the household electrical appliances connected to the output terminals.

In an embodiment according to the present disclosure, the first output terminal L and the second output terminal N are configured to output 220V alternating current. In this manner, 220V alternating current can be output from the first output terminal L and the second output terminal N, thereby powering various household electrical appliances R1 such as lighting lamps, electric fans or electric ovens. This in turn enables the provision of diverse lifestyle possibilities for vehicle owners with demands such as outdoor camping, and improves the user-friendliness of the electric vehicle according to the present disclosure.

In an embodiment according to the present disclosure, the inverter circuit includes the AC motor M1 and an electric drive bridge arm IG1+IG4, IG2+IG5, or IG3+IG6 associated with each phase of the AC motor M1, where each electric drive bridge arm IG1+IG4, IG2+IG5, or IG3+IG6 includes two switching tubes IG1 and IG4, IG2 and IG5, or IG3 and IG6, and a connection point of the two switching tubes IG1 and IG4, IG2 and IG5, or IG3 and IG6 is configured to connect to one phase of the AC motor M1. In this manner, the DC voltage output by the DC battery equipped in the electric vehicle can be converted into each phase of the three-phase AC power, thereby meeting the power demand of the three-phase AC motor.

In an embodiment according to the present disclosure, the inverter circuit further includes a control circuit (not shown in the figure), where the control circuit is configured to control the on-off of the switching tubes IG1 and IG4, IG2 and IG5, or IG3 and IG6 incorporated in the electric drive bridge arm IG1+IG4, IG2+IG5 or IG3+IG6, so as to control level of input electric potential of each phase of the AC motor M1. In this manner, the alternating current meeting the requirements (e.g., voltage level, current frequency) can be generated automatically and programmatically by means of the control circuit, thereby providing a stable power supply for household electrical appliances R1.

Preferably, in an embodiment according to the present disclosure, the motor M1 is configured as a three-phase AC motor. More preferably, in an embodiment according to the present disclosure, the first phase and the second phase are any two phases selected from the three-phase AC motor.

Preferably, in an embodiment according to the present disclosure, the inverter circuit further includes storage batteries BAT1 and BAT2, where the storage batteries BAT1 and BAT2 are configured to provide direct current and is connected across both ends of the two switching tubes IG1 and IG4, IG2 and IG5, or IG3 and IG6 assigned to each phase. More preferably, in an embodiment according to the present disclosure, the inverter circuit further includes a second capacitor C1, where the second capacitor C1 is provided between a positive pole and a negative pole of the storage batteries BAT1 and BAT2.

Moreover, a second aspect of the present disclosure proposes an electric vehicle, the electric vehicle includes the inverter circuit proposed according to the first aspect of the present disclosure. Preferably, in an embodiment according to the present disclosure, the electric vehicle further includes interface terminals +/- on the right side of charging interfaces K5 and K4, positive and negative terminals +/- of the charging interface are electrically connected to the positive and negative poles of the storage battery of the electric vehicle via relays K5 and K4, respectively.

In summary, in the inverter circuit and the corresponding electric vehicle proposed according to the present disclosure, the voltages of the two phases of the AC motor can be selected by means of the timing coordination of the relays, thereby generating the required alternating current to meet the power demand of the household electrical appliances connected to the output terminals.

Although the embodiments of the present disclosure have been described with reference to several specific embodiments, it should be understood that the embodiments of the present disclosure are not limited to the disclosed specific embodiments. The embodiments of the present disclosure are intended to cover various modifications and equivalent arrangements included within the spirit and scope of the appended claims. The scope of the claims shall be construed in the broadest manner so as to encompass all such modifications as well as equivalent structures and functions.

## Claims

1. An inverter circuit for an electric vehicle, the electric vehicle comprising an AC motor, wherein the inverter circuit comprises:
a first relay (K8), wherein the first relay (K8) is connected after a first phase (L2) of the AC motor;
a second relay (K9), wherein the second relay (K9) is connected after a second phase of the AC motor, an end of the first relay (K8) away from the first phase is electrically connected to an end of the second relay (K9) away from the second phase;
a first output terminal and a second output terminal, wherein the first output terminal and the second output terminal are configured to output alternating current;
a first capacitor (C3), wherein the first capacitor is provided between the first output terminal and the second output terminal; and
a third relay (K10) and a fourth relay (K11), wherein the third relay is provided between the first output terminal and a first connection point, the first connection point is located between the second relay and the second phase, and wherein the fourth relay is provided between the second output terminal and a second connection point, the second connection point is located between the first relay and the first phase.

2. The inverter circuit according to claim 1, wherein the first output terminal and the second output terminal are configured to output 220V alternating current.

3. The inverter circuit according to claim 1, wherein the inverter circuit comprises the AC motor and an electric drive bridge arm associated with each phase of the AC motor, wherein each electric drive bridge arm comprises two switching tubes, and a connection point of the two switching tubes is configured to connect to one phase of the AC motor.

4. The inverter circuit according to claim 3, wherein the inverter circuit further comprises a control circuit, wherein the control circuit is configured to control the on-off of the switching tubes incorporated in the electric drive bridge arm, so as to control level of input electric potential of each phase of the AC motor.

5. The inverter circuit according to claim 3, wherein the motor is configured as a three-phase AC motor.

6. The inverter circuit according to claim 5, wherein the first phase and the second phase are any two phases selected from the three-phase AC motor.

7. The inverter circuit according to claim 3, wherein the inverter circuit further comprises a storage battery, wherein the storage battery is configured to provide direct current and is connected across both ends of the two switching tubes assigned to each phase.

8. The inverter circuit according to claim 7, wherein the inverter circuit further comprises a second capacitor, wherein the second capacitor is provided between a positive pole and a negative pole of the storage battery.

9. An electric vehicle, wherein the electric vehicle comprises the inverter circuit according to any one of claims 1 to 8.

10. The electric vehicle according to claim 9, wherein the electric vehicle further comprises a charging interface, positive and negative terminals of the charging interface are electrically connected to the positive and negative poles of the storage battery of the electric vehicle via relays, respectively.
